(19)

Europäisches
Patentamt
European
Patent Office
Office européen
des brevets

(11)  **EP 1 742 459 A1**

(12)  **EUROPEAN PATENT APPLICATION**

(43) Date of publication:
**10.01.2007 Bulletin 2007/02**

(51) Int Cl.:
**H04N 3/233** (2006.01)

(21) Application number: **05012683.8**

(22) Date of filing: **13.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: SONY DEUTSCHLAND GmbH
**50829 Köln (DE)**

(72) Inventor: **Lei, Zhichun,**
**c/o Stuttgart Tecnology Center
Hedelfingerstrasse, 61,
70327 Stuttgart (DE)**

(74) Representative: **Müller - Hoffmann & Partner
Patentanwälte,
Innere Wiener Strasse 17
81667 München (DE)**

(54)  **Method for geometry distorsion correction**

(57)  A method for pre-processing image data is proposed, wherein a image (PI) is pre-distorted in order to compensate a distortion created by a display process. According to the inventive method an additional memory is used wherein said image (PI), a pre-distorted image (PPI), parts thereof, in particular extra pixels thereof, are stored in said additional memory.

overall transfer function T

$$T = DO \square PDO = id$$

Fig. 8

EP 1 742 459 A1

**Description**

Field of the Invention

The present invention relates to a method for pre-processing image data and in particular to a method for pre-processing image data which is capable of correcting the digital geometry distortion and/or of compensating non-uniform imaging properties of further processing steps and/or of display devices in a simple and reliable manner. The present invention further relates to a fine adjustment of such a correction or compensation.

Background of the Invention

One major assumption within the design of methods for processing image data and/or within apparatuses and methods for displaying images is geometry conform relationship between the original image data to be displayed and the displayed image which is shown on a screen or the like. However, it turned out that the further processing steps and/or the steps of displaying an image and/or the device for displaying the image, in particular the screen or the like, induce according to its own characteristics, certain geometric distortion properties. Even holes, outlier and the like may result.

Known approaches to overcome and to compensate for these geometry distortion properties increase the burden in the processing steps with respect to the computational load and/or with respect to the respective electronic component complexity.

Summary of the Invention

It is an object of the present invention to provide a method for pre-processing image data and a system and an apparatus to realize such a method that can guarantee a reliable geometric compensation of the image data to be displayed in a particular simple way.

This object is achieved by a method for pre-processing image data according to the features of independent claim 1. Preferred embodiments of the inventive method for pre-processing image data are defined in the dependent sub claims. The object is further achieved by a system, apparatus or device for processing image data according to independent claim 23, by a computer program product according to independent claim 28, as well as by a computer readable storage medium according to independent claim 29. The object is further achieved by a video display system and/or video display apparatus according to claim 26 and by a method for image processing according to claim 27.

In its broadest sense, according to the present invention it is proposed to use an additional memory in order to at least temporarily store a image, a pre-distorted image, and/or parts thereof, in particular extra pixels thereof.

Therefore a method for pre-processing image data is proposed, wherein a image corresponding to an image to be displayed is pre-distorted in order to compensate a distortion subjected to said image to be displayed by the display process, thereby generating a pre-distorted image, wherein an additional memory is used, and wherein said image, said pre-distorted image, parts thereof, in particular extra pixels, and/or data representative therefore are at least temporarily stored in said additional memory.

Additionally, according to the present invention a respective system, apparatus and/or device for carrying out the method for pre-processing image data according to the present invention are provided.

Further a video display system, a video display apparatus, a method for image processing, a computer program product and a computer readable storage medium are provided which are also based on the concept of realizing the usage and/or the provision of an additional memory.

Brief description of the Drawings

The invention will now be explained based on preferred embodiments thereof and by taking reference to the accompanying and schematical figures.

**Fig. 1**    is a schematical illustration for a test image.

**Fig. 2**    is a schematical elucidation for a device distorted, an ideal and a pre-warped or pre-distorted image.

**Fig. 3**    is a schematical block diagram for a picture or image reconstruction process according to the present invention.

**Fig. 4**    is a more detailed graphical elucidation for the geometry distortion correction according to the present invention.

**Fig. 5** is a schematical elucidation for a mirroring method which can be applied in an embodiment of the method for image pre-processing according to the present invention.

**Fig. 6** is a graphical representation of a 2T impulse signal.

**Fig. 7** is a schematical representation or visualization of the outlier and hole problem.

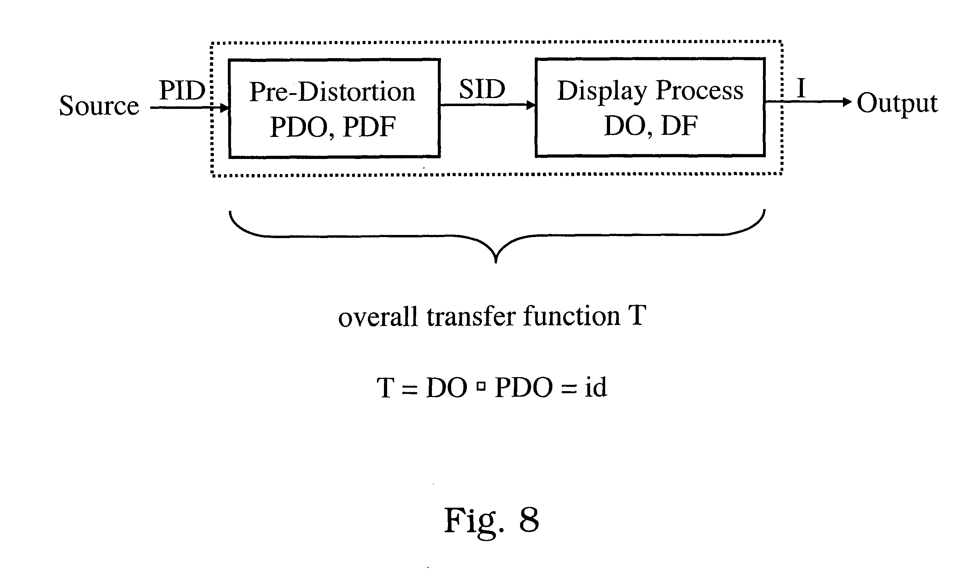

**Fig. 8** is a schematical block diagram demonstrating some of the basic ideas of the present invention.

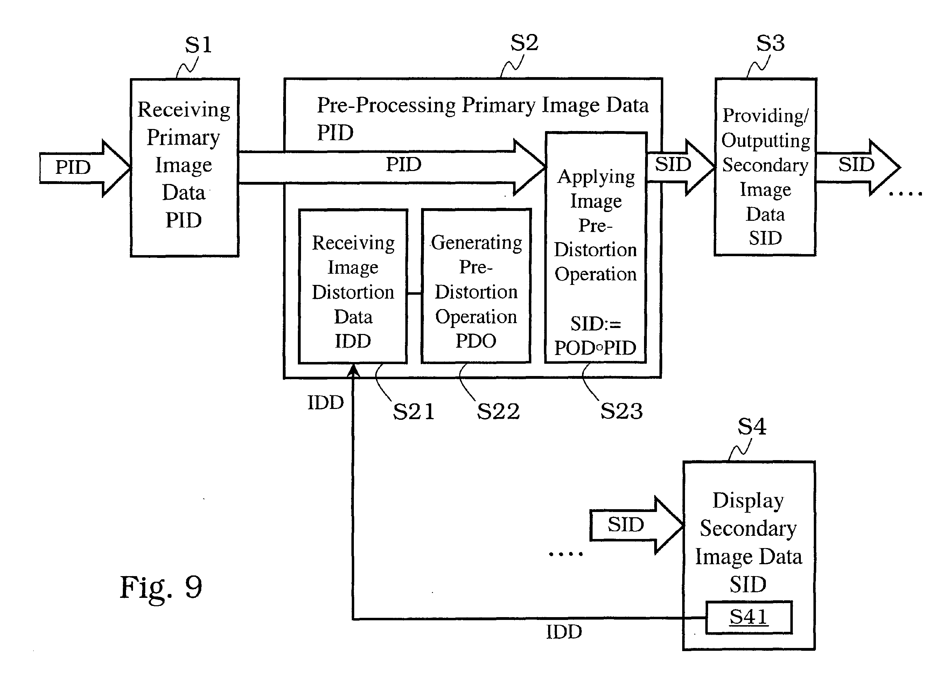

**Fig. 9** is a schematical block diagram of a preferred embodiment of the inventive method for pre-processing image data.

Detailed description of the Invention

In the following functional and structural similar or equivalent element structures will be denoted with the same reference symbols. Not in each case of their occurrence a detailed description will be repeated.

According to the present invention a method for pre-processing image data is proposed, wherein an image I to be displayed is pre-distorted in order to compensate a distortion subjected to said image I to be displayed by the display process, thereby generating a pre-distorted image PPI, wherein an additional memory is used, and wherein said image, said pre-distorted image, parts thereof, in particular extra pixels, and/or data representative therefore are at least temporarily stored in said additional memory.

Artefacts may be avoided and/or compensated by using said additional memory.

Artefacts of the group may be avoided and/or compensated which comprises outliers, holes, zigzag artefacts and Moiré artefacts.

A distortion correction may be finely adjusted.

A distortion correction may finely adjusted by adjusting and/or readjusting horizontal and/or vertical addresses of one or a plurality of pixels in particular of said pre-distorted image.

Pixel values and/or pixel addresses may be reconstructed.

Pixel values and/or pixel addresses may be reconstructed by making full use of a correspondence of one or a plurality of pixels of said pre-distorted image, said respective image and/or with respect to said image I to be displayed.

Pixel values and/or pixel addresses may be reconstructed by using just a respective copy process without taking reference to neighbourhood pixels.

A process of mirroring may be performed in a pre-distortion process.

A process of inverse mapping may be performed in a pre-distortion process.

Polynominal roots may be calculated and used in a pre-distortion process.

The present invention in particular relates also to digital geometry distortion correction and also in particular to its fine adjustment.

This invention application discloses methods for digital geometry distortion correction and for finely tuning the individual distortion correction result. The geometry distortion means here a variety of form, e.g. the projector's keystone distortion, the digital camera's fisheye distortion and the geometric distortion of the rear projection displays.

The geometry distortion is corrected by intentionally pre-distorting, also called pre-warping or reshaping, the picture in question. Ideally, the pre-warping function, which can be a polynomial, is just the inverse of the function describing the device geometry distortion. A test image is applied to estimate the device geometry distortion or the pre-warping function.

One tunes the individual distortion correction result by either subjectively or objectively adjusting the pixel address of the pre-warped pixel in question.

In the reference on geometric distortion correction, there are different ways to classify the state-of-the-art of the geometric distortion correction: e.g. mechanical and electronic, or analogue and digital. Usually, "mechanical" and "analogue" mean something similar; "electronic" and "digital", too.

There are numerous mechanical approaches for Cathode Ray Tube (CRT) pincushion distortion correction. The basic idea is: pre-distorting the deflection current, by e.g. mounting magnets on the housing of the deflection yoke. Because even for the same CRT models the individual CRT characteristics can differ from each other, usually the CRT pincushion distortion correction result has to be afterwards tuned, e.g. modifying the coil number, finely adjudging the magnet position.

However, there is a strong tendency of electronic geometric distortion correction, i.e. by means of digital image processing method, in particular for (portable) projectors, rear projection displays, digital cameras, and so on.

Digital geometry distortion correction methods have been reported in many references, e.g. those listed at the end of this section. Basically, the digital geometry distortion correction can be divided into two categories: blind and referenced geometry distortion correction.

For the blind method, the geometry distortion is corrected in the absence of any calibration information or explicit knowledge of the imaging device. It exploits the fact that geometric non-linearity introduces specific correlations higher order (e.g. beyond 2nd order) in the frequency domain. These correlations can be estimated using tools from the poly-spectral analysis. Then the non-linearity distortion is estimated and removed by simply minimizing these correlations [Farid01, Farid02]. This kind of method does not need any calibration information. Its drawbacks are that it is computationally very intensive, and its accuracy is by no means comparable to the geometry distortion correction method with calibration information.

Many references have reported the referenced geometry distortion correction method, e.g. [Rod03, SukSt01, Suk01, Ka02]. However, they emphasize different aspects, their ideas are different and so do their patent claims. We have not taught about 1) the method for finely adjusting the individual geometry distortion correction result, namely by adjusting the pixel vertical / horizontal address; 2) the method to overcome the "outlier and hole" artefacts, namely using an additional memory to store additional pixels for the pre-warped image; 3) the method to reconstruct pixel value, namely making full use of the correspondence between the pre-warped pixel and its counterpart on the image to be displayed; and 4) the mirroring method and the inverse mapping method.

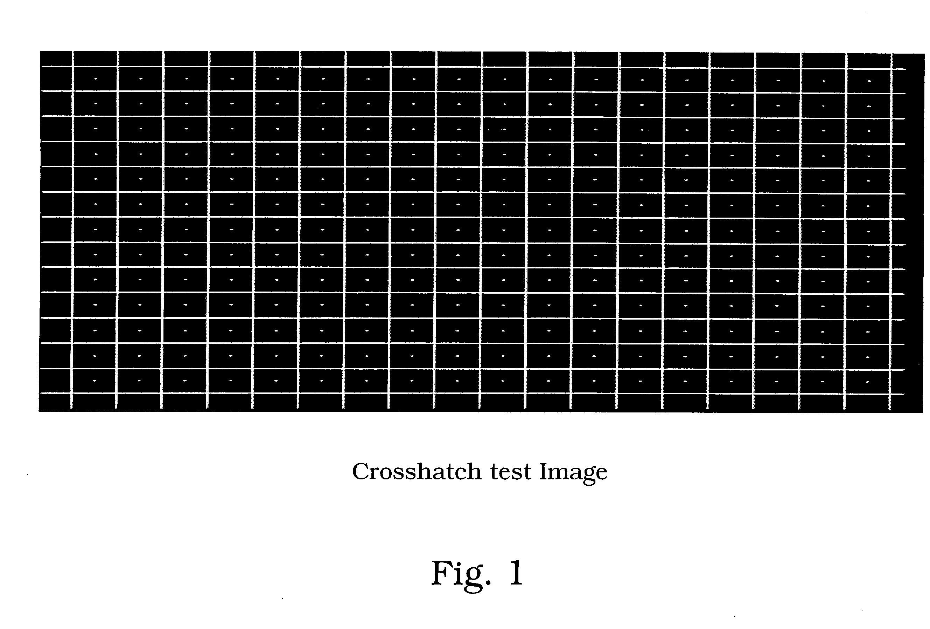

Therefore, the referenced geometry distortion correction method is used for many applications. For the referenced geometry distortion correction method, a test image, usually the crosshatch image, is applied to estimate the calibration information. Fig. 1 shows such a test image

The calibration information is an estimation of the function from the original, which is known, to the distorted image, which can be measured from the final display media, e.g. the screen, using e.g. ruler. This function is used to predistort (often called pre-warp, or reshape) the pictures to be displayed. Ideally, the pre-warping function is the inverse of the estimated function. Because the pixel position of the pre-warped image is usually non-integer, the pixel grey value is computed using the poly-phase interpolation methods, for instance, the cubic convolution function method [Wol90, Pratt91].

Problem

The state-of-the-art digital geometry distortion correction method often causes moiré and zigzag artefact. Besides, fine adjustment method for individual geometry distortion correction result is desired, and this kind of adjustment method should be easy and low-cost.

This invention application provides a method for individually, digitally and finely adjusting the geometry distortion correction result. This kind of fine adjustment is needed, because the calibration information itself can be not precise enough, in particular it is estimated for one type of devices and performance deviation among the same type of devices is allowed. In addition to a method for fine adjustment of the geometry distortion correction result, this invention application also aims at preventing artefacts, like moiré artefact and zigzag artefact, from being caused by the image reshaping.

Solution

System Overview

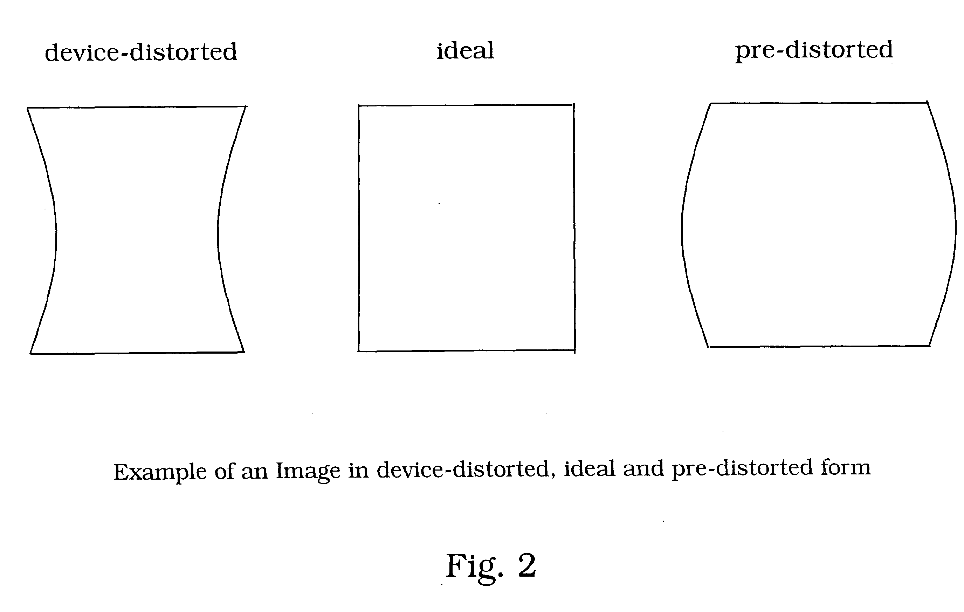

For geometry distortion correction, one usually intentionally pre-distorts the images to be displayed by the device in question. Fig. 2 schematically shows the device distorted (b), the ideal (a) and the pre-warped image (c), respectively.

The pre-warping fulfils the reverse of the device distortion. For the distorted picture, for example, if the curve bends inwards toward the display centre, then for the pre-warped one, the curve bends outwards toward the display centre, and vice versa.

After the pre-warped picture is displayed by device in question (for instance, projectors), one obtains a corrected one on the device screen.

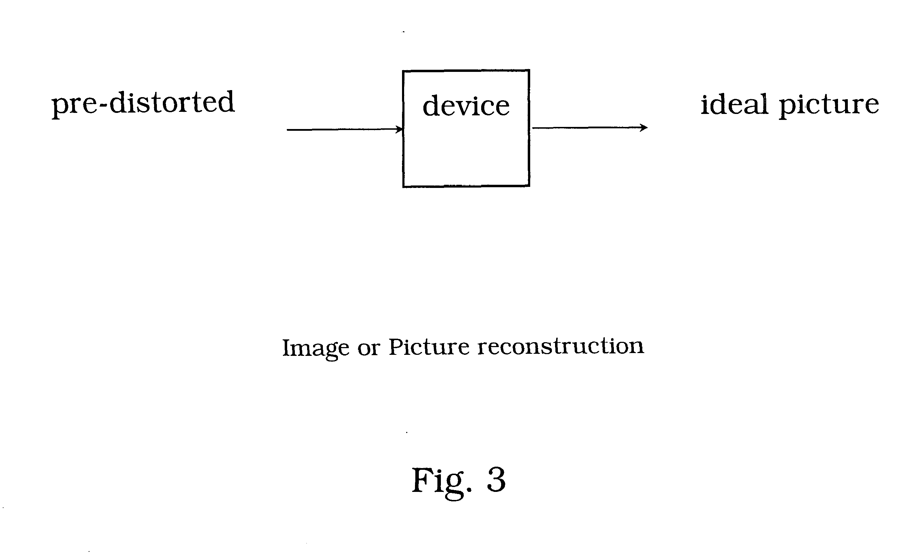

Fig. 3 demonstrates the picture or image reconstruction process.

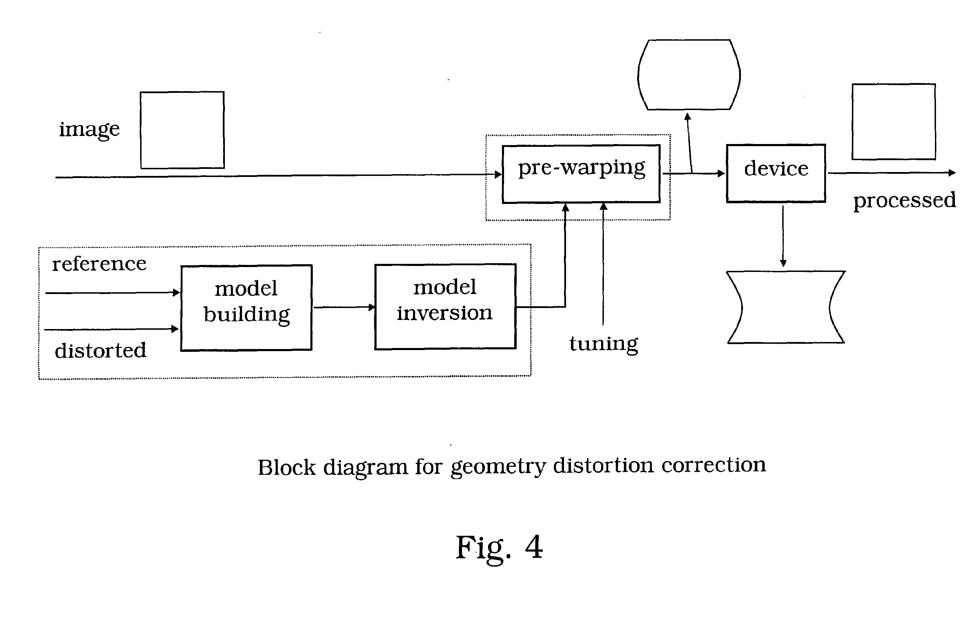

The complete procedure for geometry distortion correction is shown by Fig. 4.

The geometric distortion is normally modelled off-line from the test (reference) image and the image distorted by device e.g. projector, cf. the lower part of Figure 4. For each type of device, in general it need be modelled once. For this kind of modelling, one can apply different mathematical methods [Wol90, Num92]. As already mentioned, the geometric distortion correction result has to be afterwards tuned to achieve the best result for each individual device in question.

Selection of Mathematical Model

Basically, the image geometric transformation methods can be divided into two classes: the polynomial and the perspective transformation [Glas98, Leo99]. The other transformations, such as the translation, dilation, rotation, Procrustes, affine and the bilinear transformation can be derived from the polynomial and the perspective transformation [Glas98]. We want to point out that indeed there also exists relationship between the polynomial transformation and the perspective transformation.

In the following, we will discuss these two geometric transformations. Let $(u_k, v_k)$ and $(x_k, y_k)$ with k=1,2,...M respectively represent the coordinate positions in the reference and observed image. These coordinate positions are called control points, and M stands for the total number of the control points.

Perspective Transformation

The perspective transformation arises if a planar object is viewed from a fixed point in space. A perspective transformation can be expressed as a nine-coefficient rational function [Wol90]:

$$u_k = \frac{a_{11}x_k + a_{21}y_k + a_{31}}{a_{13}x_k + a_{23}y_k + a_{33}} \quad \text{and} \quad v_k = \frac{a_{12}x_k + a_{22}y_k + a_{32}}{a_{13}x_k + a_{23}y_k + a_{33}}. \tag{1}$$

It is the most general transformation which maps straight lines at all orientations to straight lines. However, division is not desired for many applications, e.g. hardware implementation. Thus, in the following we focus on the polynomial transformation, which does not need division.

Polynomial Transformation

The bivariate polynomial transformation of order P can be expressed as [Wo190]

$$u_k = \sum_{i=0}^{P}\left( \sum_{j=0}^{i} a_{j(i-j)}x_k^{(i-j)}y_k^{j} \right) \quad \text{and} \quad v_k = \sum_{i=0}^{P}\left( \sum_{j=0}^{i} b_{j(i-j)}x_k^{(i-j)}y_k^{j} \right). \tag{2}$$

The number of the polynomial coefficients ($a_{ij}$ or $b_{ij}$) for each transformation ($u_k$ or $v_k$) amounts to:

$$K = \frac{(P+1)(P+2)}{2}. \tag{3}$$

That is, for a fifth-order polynomial (P=5) 21 coefficients are needed for each coordinate transformation. The inferring of these coefficients is the task of the numerical analysis, which will be discussed in the next section.
The polynomial order for an envisaged modelling has to be estimated, e.g. one at first supposes an order, and examines the modelling result. If the modelling result is not satisfied, one has to choose another value. Usually, a better modelling result can be achieved if the polynomial order is chosen higher than it should be, compared to the case if the polynomial order is chosen lower than it should be. However, for applications, it is important to determine the polynomial order that is no more general than it needs to be.

Global and Piecewise Geometric Transformation

Above, we have generally discussed the geometric transformation perspective and polynomial transformation. They can be applied either globally or locally (often called piecewise in the references) [Glas98]. Global transformation refers to that a whole image is modelled by a single geometric transformation. On the contrary, for piecewise transformation, as its name says, the geometric transformation models only one piece of the image in question, i.e. to model a whole image one needs more than one geometric transformations.

Piecewise geometric transformation is preferred in the presence of local distortions or for severely distorted images. Those images cannot be modelled with a single geometric transformation of reasonable order.

For many kinds of devices a single polynomial can cope with modelling its geometry distortion. According to our modelling results, a fifth order polynomial offers a satisfying result to describe the CRT geometry distortion, and a 2nd order polynomial can fully describe the projector's keystone distortion.

Methods for Model Parameter Determination

The lower part of Fig. 4 shows the geometric distortion modelling. For this modelling, the mathematic method, like the pseudo-inverse solution, which proves to be identical to that of the classic least-squares formulation with ordinary polynomials, least squares with orthogonal polynomials or singular value decomposition (SVD) [Wol90, Num92], can be utilized.

Compared to the method of least-square with ordinary polynomials, the method of least-square with orthogonal polynomials offers several advantages. First, the numerical accuracy is generally improved, and the ill-conditioning problem caused by the matrix inverse operation is avoided. Second, determining the polynomial coefficients does not require solving system of linear equations, which is time consuming. Instead, a closed-form solution is available. Third, additional orthogonal terms can be added to the coordinate transformation function to increase the modelling accuracy, and this does not need re-computation of all the polynomial coefficients. Due to its lower computational load, the method of least-square with orthogonal polynomials is a good candidate for the on-line or real time geometric correction purpose.

The SVD method has a higher computational load than the method of the least-square with orthogonal polynomials. However, it performs more robustly than the least-square with orthogonal polynomials because the SVD method can prevent the final modelling result from being corrupted by the calculation round-off error. If the real-time computing is of no major concern, SVD method should be preferred. For CRT pincushion distortion correction, the calibration information is needed only once for each type of CRT, and the real-time computing is not necessary. Therefore, SVD method can be chosen for this task. For projector keystone distortion correction, time-consuming calculation should be avoided. However, the keystone distortion can be modelled by a polynomial being of lower order, e.g. 2nd order, and therefore the SVD computational load is not high. Thus, for projector geometry distortion correction the SVD method is also suitable.

For details about these three mathematic methods as well as the comparison among them, please refer to [Wol90] and [Num92].

Methods for Image Pre-warping

Computing Polynomial Roots

We assume the second-order polynomial given in equation (4). With the assumption that $(u_k, v_k)$ and $(x_k, y_k)$ for $k=1,2,...,M$ represent the coordinate positions in the reference and observed image, the polynomial can be written as:

$$\begin{cases} u_1 = a_{00} + a_{01}x_1 + a_{10}y_1 + a_{02}x_1^2 + a_{11}x_1y_1 + a_{20}y_1^2 \\ u_2 = a_{00} + a_{01}x_2 + a_{10}y_2 + a_{02}x_2^2 + a_{11}x_2y_2 + a_{20}y_2^2 \\ \dots\dots\dots\dots\dots\dots\dots\dots\dots\dots \\ u_M = a_{00} + a_{01}x_M + a_{10}y_M + a_{02}x_M^2 + a_{11}x_My_M + a_{20}y_M^2 \end{cases}$$

$$(4)$$

$$\begin{cases} v_1 = b_{00} + b_{01}x_1 + b_{10}y_1 + b_{02}x_1^2 + b_{11}x_1y_1 + b_{20}y_1^2 \\ v_2 = b_{00} + b_{01}x_2 + b_{10}y_2 + b_{02}x_2^2 + b_{11}x_2y_2 + b_{20}y_2^2 \\ \dots\dots\dots\dots\dots\dots\dots\dots\dots\dots \\ v_M = b_{00} + b_{01}x_M + b_{10}y_M + b_{02}x_M^2 + b_{11}x_My_M + b_{20}y_M^2 \end{cases}$$

Replacing $(u_k, v_k)$ by $(x_k, y_k)$ in equation (4) results:

$$\begin{cases} a_{00} + a_{01}p_1 + a_{10}q_1 + a_{02}p_1^2 + a_{11}p_1q_1 + a_{20}q_1^2 \quad - x_1 = 0 \\ a_{00} + a_{01}p_2 + a_{10}q_2 + a_{02}p_2^2 + a_{11}p_2q_2 + a_{20}q_2^2 \quad - x_2 = 0 \\ \qquad\cdots\cdots\cdots\cdots\cdots\cdots\cdots\cdots\cdots \\ a_{00} + a_{01}p_M + a_{10}q_M + a_{02}p_M^2 + a_{11}p_Mq_M + a_{20}q_M^2 - x_M = 0 \end{cases}$$

$$(5)$$

$$\begin{cases} b_{00} + b_{01}p_1 + b_{10}q_1 + b_{02}p_1^2 + b_{11}p_1q_1 + b_{20}q_1^2 \quad - y_1 = 0 \\ b_{00} + b_{01}p_2 + b_{10}q_2 + b_{02}q_2^2 + b_{11}p_2q_2 + b_{20}q_2^2 \quad - y_2 = 0 \\ \qquad\cdots\cdots\cdots\cdots\cdots\cdots\cdots\cdots \\ b_{00} + b_{01}p_M + b_{10}q_M + b_{02}p_M^2 + b_{11}p_Mq_M + b_{20}q_M^2 - y_M = 0 \end{cases}$$

Let us mention again that $(x_k, y_k)$ with k=1,2,...M respectively represents the coordinate positions in the observed image. It is further assumed that the polynomial coefficients aij and bij of equation (4) have already been computed by e.g. the SVD method. Then, the roots of equation (5) $-(p_k, q_k)$ are just the solution for the horizontal coordinates of the pre-warped image.

The complexity is high when computing the roots of a polynomial whose order is higher than two, e.g. a fifth-order polynomial. In particular, the computing result is not always useful because the computed roots can be imaginary, or beyond the image size. Thus, other approaches have been done to fulfil the pre-warping task.

Mirroring Method

For simplicity, we only discuss the case of horizontal pre-warping. The discussing result is also suitable for the vertical pre-warping.

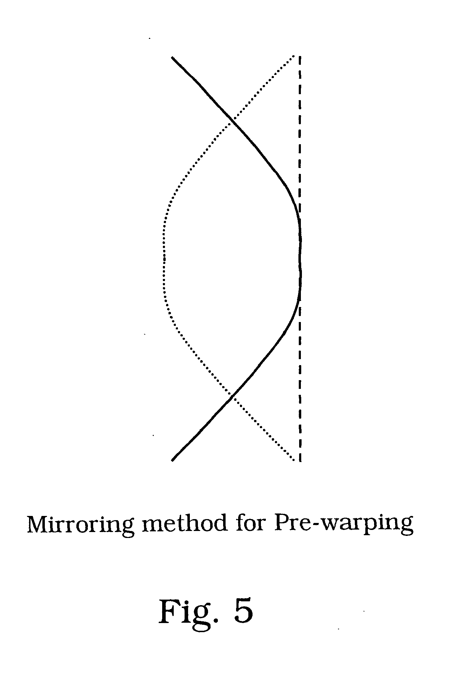

Suppose that for horizontal geometry distortion, a vertical line (cf. the dashed vertical line in Fig. 5) bends inwards toward the image centre, and the bending degree becomes large as it goes away from the centre (cf. the solid curve of Fig. 5).

We obtain the pre-warped counterpart by mirroring the solid curve. This results the dotted curve of Fig. 5.

Due to the strong non-linearity of the geometric distortion, the coordinates pre-warped by the mirroring method usually do not guarantee a perfect geometric distortion correction, and the device output appears slight distortion. If the crosshatch test image is displayed, one perceives "outlier" along vertical line. Outlier refers to pixel that lies out of the should-be-column position, which will be discussed more in detail in the next section.

Inverse Mapping Method

A better pre-warping result can be achieved by the so-called inverse mapping method. It is called forward mapping that the reference image (free of geometric distortion) is projected to the image with geometry distortion [Wol90]. Its opposite -inverse mapping projects the image with geometry distortion back to the reference image. Similar to the forward warping, the inverse mapping can also be modelled by a polynomial, and the polynomial coefficients (denoted as $c_{ij}$ and $d_{ij}$) can also be computed by e.g. the SVD method. The inverse mapping polynomial can be applied to image pre-warping, i.e. one projects the image to be displayed using the inverse mapping polynomial, as described by the following equations:

$$p_k = \sum_{i=0}^{P}\left(\sum_{j=0}^{i} c_{j(i-j)} u_k^{(i-j)} v_k^{j}\right) \text{ and } q_k = \sum_{i=0}^{P}\left(\sum_{j=0}^{i} d_{j(i-j)} u_k^{(i-j)} v_k^{j}\right), \tag{6}$$

where P represents the order of the polynomial, $(u_k, v_k)$ stands for the coordinate position of any image to be displayed, and $(p_k, q_k)$ is just the pre-warping result. Our simulation results prove that for image pre-warping the inverse mapping method provides a better result than the mirroring method.

Pixel Value Reconstruction

Above, we have emphasized on the image coordinate pre-warping. Once the coordinate pre-warping has been fulfilled, the pixel value of the pre-warped pixel position has to be further determined.

The pre-warped pixel position is usually non-integer. One usually reconstructs the pixel value by means of the poly-phase interpolation method. For this, one need at first find its counterpart position in the image to displayed. Because the pre-warped pixel position is in floating-point format, one also needs to know the neighbouring pixel positions of the found counterpart. The value of the pre-warped pixel position is then interpolated from the values of these pixels in the image to be displayed.

Simulation had been done with the poly-phase interpolation method. For most cases, this method can give a satisfying result. However, artefacts appear with e.g. the multi-burst test image. The artefacts are moiré disturbance and brightness loss. In particular, the moiré artefact appears disturbing. The moiré problem happens particularly with high frequency components.

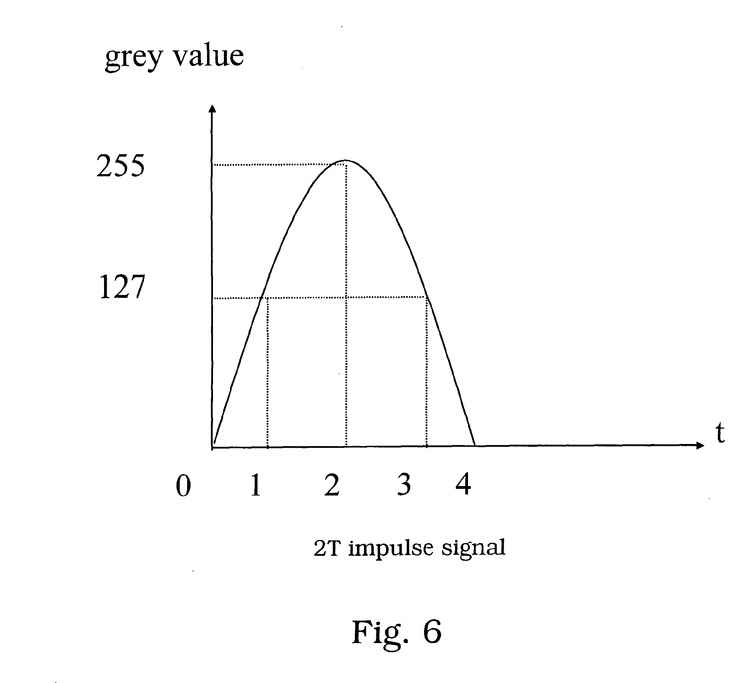

Investigation has been done regarding the moiré and brightness loss problem. The moiré problem is in fact a problem of the grey value distortion, but in specified musters. It has been found out that this kind of grey value distortion problem exists in spite of the deliberate choose of interpolation method presented in [Pratt91]. The moiré and brightness loss problem is closely related each other. For the investigation, we apply the TV measurement signal - 2T impulse signal, as shown in Fig. 6.

It is clear that brightness loss will be caused if any pixels located at t=0, 1, 3 or 4 contribute to the reconstruction of the pixel located at t=2. The brightness loss with the 2T impulse signal is not negligible due to its high frequency component. This explains the brightness loss artefact caused by the poly-phase interpolation method.

If the pre-warped pixel positions (keeping in mind that they are in floating-point format) have slight difference, the reconstructed pixel values will be different, and the difference is not negligible. For a vertical straight line consisting of the 2T impulse signal, like the multi-burst test image, the pixel value difference from line to line causes the disturbing moiré artefact.

Linear pixel value reconstruction method, like the poly-phase interpolation method, cannot well avoid the moiré and brightness loss problem. Nonlinear value reconstruction method should be used.

In fact, there exists a clear correspondence between the pre-warped pixel and its counterpart on the image to be displayed. This correspondence is defined by the pre-warping polynomial. For a pre-warped pixel position, its origin is known to us. Thus, one can simply copy the value of the original pixel.

Solution to "Outlier and Hole" Problem

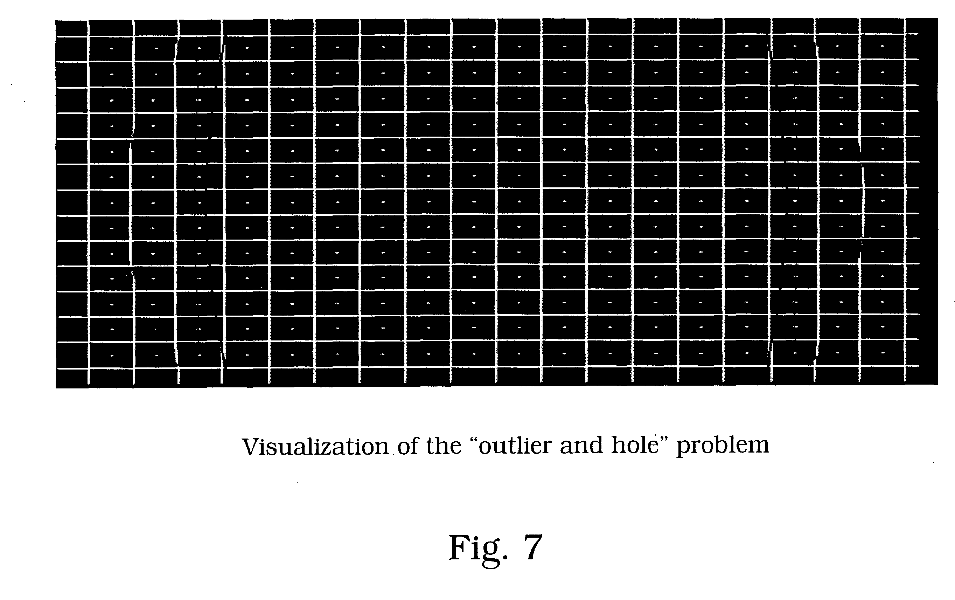

At first, we would like to point out that the "outlier" and "hole" problem is mainly encountered with the matrix display (matrix display visualizes pixels with integer coordinate position!). The "outlier and hole" artefacts are visualized by Fig. 7.

We have introduced the "outlier" problem. Reasoning to the outlier problem: The device model and its reverse for pre-warping are obtained on the principle of LMS (Least Mean Square error). Associated with the LMS, most of the pixels are pre-warped correctly, but a small amount of pixels are pre-warped with less or more deviation. The data format can also contribute to the outlier problem. Another reason is connected with the "hole" problem, and will be discussed in the following.

As result, one needs to individually adjust the pre-warped pixels in question, i.e. the coordinate position of a pre-warped pixel is tuned if it causes outlier problem. In this way, the outlier number can be reduced.

The "hole" problem refers to that there are pixel positions that cannot be filled (empty) after geometry distortion correction. The empty pixels are caused by the strong non-linearity of the geometry distortion, the linear coordinate system of the image processing, and the matrix display. Let us take an example to explain this. Two different coordinate positions on the pre-warped image will result in two pixels with different positions after geometry distortion correction. The coordinate positions of these two resulting pixels are usually not an integer number. For matrix display, the coordinate positions of these two resulting pixels have to be rounded to integers, namely two different integer numbers. However, it can happen that they are wrongly rounded to the same integer value. As result, some positions cannot be occupied.

In fact, the strong non-linearity of the geometry distortion, the linear coordinate system of the image processing, and the matrix display are also a cause of the "outlier" problem, namely the "outlier" problem and the "hole" problem are interconnected.

The "hole" problem can be overcome by application of an additional memory to store additional pixels for the pre-warped image. That is, one adds pixels to the pre-warped image so that they let the "hole" be filled.

Fine Adjustment of Individual Geometry Distortion Correction Result

Fine adjustment of individual geometry distortion correction result is needed, because the calibration information itself estimated for geometry distortion correction can be not precise enough. In particular, the calibration information is estimated for one type of devices and performance deviation among the same type of devices is allowed. In practice, manufactures specify the tolerance range for their products.

Last section, which aims at solving the "outlier and hole" problem, already dealt with the individually adjusting the geometry distortion correction result. However, that kind of individual adjustment is based on a test picture, preferably the crosshatch test picture, and aimed at estimating the calibration information. It belongs to the objective methods. For the method to be discussed in this section, one adjusts the individual geometry distortion correction result with the aid of subjective tests. The amount of this kind of adjustment is usually very small, about $\pm 1$ pixel.

Without such fine adjustment, from the final output, like the screen, one would observe artefacts, like zigzag along edges, outlier, broken lines. These artefacts are usually caused by the pixel position shift, right or left, up or down. Therefore, one can adjust the pixel position right or left, up or down in order to counter the undesired pixel position shift. Because each pixel can be addressed by selecting its vertical and horizontal address, one can counter the undesired pixel position shift by adjusting the vertical and horizontal address. For standard TV signal, there are 576x720 active pixels. Thus, there are 576 vertical and 720 horizontal addresses. By adjusting these addresses one can reach the goal of fine adjustment of individual geometry distortion correction result. For each device, only once such adjustment is required.

For this invention the following aspects are of relevance if taken alone or in any combination with each other:

- A geometric distortion correction method, system or apparatus, that is characterized by the method to finely adjust the individual geometry distortion correction result, namely by adjusting the pixel vertical/horizontal address.
- A geometric distortion correction method, system or apparatus, that is characterized by the method to avoid the "outlier and hole" artefacts, namely using an additional memory to store additional pixels for the pre-warped image.
- A geometric distortion correction method, system or apparatus, that is characterized by the method to reconstruct pixel value, namely making full use of the correspondence between the pre-warped pixel and its counterpart on the image to be displayed.
- A geometric distortion correction method, system or apparatus, that is characterized by the methods for image pre-warping, namely computing polynomial roots method, the mirroring method and the inverse mapping method
- A geometric distortion correction method, system or apparatus, that is characterized by the combination of above claims.
- The application of above claims to global and local geometry distortion correction.

This invention application inter alia provides an effective and low-cost method for individually, digitally and finely adjusting the geometry distortion correction result, namely by adjusting the horizontal/vertical address of the pre-warped pixels.

The image reshaping method makes use of the relationship between the pre-warped pixel and its counterpart on the image in question, and thus avoids artefacts, like moiré and zigzag artefact, from being caused.

**Cited Literature**

[Wol90]    G. Wolberg, "Digital Image Warping", IEEE Computer Society Press, ISBN 0-8186-8944-7, 1990.
[Pratt91]    W.K. Pratt, "Digital Image Processing", 2nd Edition, ISBN 0-471-85766-1, John Wiley & Sons, Inc., 1991.
[Glas98]    C.A. Glasbey, K.V. Mardia, "A Review of Image-Warping Methods", Journal of Applied Statistics, Vol. 25, NO. 2, 1998.
[UGC00]    Universal Geometric Correction, www.isdi.com, 2000.
[Win01]    M. Winzker, U. Rabeler, "VLSI Architecture for Electronic Correction of Optical Distortions", ITG-Fachbericht, Elektronische Medien: Technologien, Systeme, Anwendungen, ISBN 3-8007-2630-0.

[Farid01]   H. Farid and A.C. Popescu, "Blind Removal of Image Non-Linearities", Proceedings of the Eighth IEEE International Conference on Computer Vision, 2001. ICCV 2001, pages 76-81, vol.1.

[Farid02]   H. Farid and A.C. Popescu, "Blind Removal of Lens Distortion", JOSA A, vol. 18, Issue 9, 2072-2078, September 2001.

[Lee02]     C. Lee, et al. "Correction of Distorted Images", Patent application, US2002164083.

[Num92]     "Numerical Recipes in C", Cambridge University Press, 1992, ISBN 0-521-43108-5.

[Leo99]     T. Leonard, "Stabilisierung des Bildstandes bei Bewegtbildsequenzen", Dissertation der Universität Dortmund, ISBN 3-8265-6711-0, Shaker Verlag, 1999 (in German).

[Rod03]     Ernesto M. Rodriguez, et al. "Integrated Front Projection System with Shared Imager and Associated Method", May 27, 2003, US 6,568,814.

[SukSt01]   Rahul Sukthankar, Robert Stockton, "Method and Apparatus for Automatic Keystone Correction", June 28, 2001, WO01/47259.

[Suk01]     Rahul Sukthankar, "Method and Apparatus for Calibrating Projector-Camera System", June 28, 2001 , WO01/47285.

[Ka02]      Bonaventure Karuta, "System and Method for Correcting Multiple Axis Displacement Distortion", December 19, 2002, WO02/101443.

**Reference Symbols**

| | |
|---|---|
| **DF** | distortion function |
| **DF$^{-1}$** | inverse/inverted distortion function |
| **DO** | distortion operation |
| **DO$^{-1}$** | inverse/inverted distortion operation |
| **I** | image, image to be displayed |
| **id** | identical operation (or intentionally distorted operation) |
| **IDD** | image distortion data |
| **IDF** | inverse/inverted distortion function |
| **IDO** | inverse/inverted distortion operation |
| **PDF** | pre-distortion function |
| **PDO** | pre-distortion operation |
| **PI** | image |
| **PID** | image data |
| **PPI** | pre-processed/pre-distorted/pre-warped image |
| **SID** | secondary image data |
| **S1** | step/process of receiving PID |
| **S2** | step/process of pre-processing PID |
| **S3** | step/process of providing/outputting SID |
| **S4** | step/process of displaying and/or generating image data to be displayed |
| **S21** | step/process of receiving IDD |
| **S22** | step/process of receiving, generating and/or providing PDO |
| **S23** | step/process of applying PDO to PID |

**Claims**

1.  Method for pre-processing image data,

    - wherein an image (I) to be displayed is pre-distorted in order to compensate a distorsion subjected to said image (I) to be displayed by the display process, thereby generating a pre-distorted image,
    - wherein an additional memory is used,
    - wherein said image, said pre-distorted image, parts thereof, in particular extra pixels, and/or data representative therefore are at least temporarily stored in said additional memory,
    - wherein the geometry distortion correction result is finally adjusted, namely by adjusting the pixel vertical/horizontal address, and
    - wherein the method to reconstruct pixel value, namely making full use of the correspondence between the pre-warped pixel and its counterpart on the image to be displayed.

2. Method according to claim 1,
   wherein artefacts are avoided and/or compensated by using said additional memory.

3. Method according to claim 2,
   wherein artefacts of the group are avoided and/or compensated which comprises outliers, holes, zigzag artefacts and Moiré artefacts.

4. Method according to any one of the preceding claims,
   wherein a distortion correction is finely adjusted.

5. Method according to any one of the preceding claims,
   wherein a distortion correction is finely adjusted by adjusting and/or readjusting horizontal and/or vertical addresses of one or a plurality of pixels in particular of said image.

6. Method according to any one of the preceding claims,
   wherein pixel values and/or pixel addresses are reconstructed.

7. Method according to any one of the preceding claims,
   wherein pixel values and/or pixel addresses are reconstructed by making full use of a correspondence of one or a plurality of pixels of said pre-distorted image, said respective image and/or with respect to said image (I) to be displayed.

8. Method according to any one of the preceding claims 6 or 7,
   wherein pixel values and/or pixel addresses are reconstructed by using just a respective copy process without taking reference to neighbourhood pixels.

9. Method according to any one of the preceding claims,
   wherein a process of mirroring is performed in a pre-distortion process.

10. Method according to any one of the preceding claims,
    wherein a process of inverse mapping is performed in a pre-distortion process.

11. Method according to any one of the preceding claims,
    wherein polynominal roots are calculated and used in a pre-distortion process.

12. Method according to any one of the preceding claims,
    comprising steps of:

    - receiving (S1) image data (PID), in particular corresponding to and/or representing an image (I) or a sequence of images (I) to be displayed,
    - pre-processing (S2) said image data (PID) by applying a pre-distortion operation (PDO) to said image data (PID) so as to obtain secondary image data (SID), and
    - providing and/or outputting (S3) said secondary image data (SID), in particular to a display process (S4) and/or to an image generation process (S4) to be performed, as data to be displayed as and/or as data to be transformed into said image (I) to be displayed,
    - wherein said pre-distortion operation (PDO) is chosen, designed and/or adapted to at least essentially and/or approximately correspond to an inverse (IDO) of a distortion operation (DO) of a display process (S4) and/or of an image generation process (S4) to be used for displaying said secondary image data (SID) and/or for transforming said secondary image data (SID) into said image (I) to be displayed, and/or
    - wherein said pre-distortion operation (PDO) is chosen, designed and/or adapted to at least essentially and/or approximately correspond to an intentionally distorted form of a display process (S4) and/or of an image generation process (S4) to be used for displaying said secondary image data (SID) and/or for transforming said secondary image data (SID) into said image (I) to be displayed.

13. Method according to any one of the preceding claims,
    wherein said pre-distortion operation PDO and said distortion operation DO fulfill the relation

$$DO \cdot PDO = id$$

and/or the relation

$$DO \cdot PDO \approx id,$$

with id denoting the identical operation and/or a desired operation, e.g. to match to the human perception and/or to the human visual system.

14. Method according to any one of the preceding claims,
wherein said pre-distortion operation PDO and said distortion operation DO fulfill the relation

$$PDO = IDO = DO^{-1}$$

and/or the relation

$$PDO \approx IDO = DO^{-1},$$

with $DO^{-1}$ and IDO denoting the inverted operation with respect to said distortion operation DO.

15. Method according to any one of the preceding claims,
wherein said pre-distortion operation (PDO) is completely or in part based on and/or defined by a pre-distortion function (PDF) in implicit or in explicit form.

16. Method according to any one of the preceding claims,
wherein said pre-distortion operation (PDO) is completely or in part based on and/or defined by a pre-distortion lookup table (PDL).

17. Method according to any one of the preceding claims,
comprising a step of receiving, providing and/or generating (S22) said pre-distortion operation (PDO) and in particular said pre-distortion function (PDF).

18. Method according to claim 17,
wherein said step of providing and/or generating (S22) said pre-distortion operation (PDO) use and/or are based on image distortion data (IDD) being representative or descriptive for said distortion operation (DO) and/or for said distortion function (DF), which are in particular obtained during a step of acquiring (S21) said image distortion data (IDD).

19. Method according to any one of the preceding claims,
wherein said pre-distortion operation (PDO), said pre-distortion function (PDF) and/or said image distortion data (IDD) are designed and/or chosen to describe global, sectional and/or local parameters for sharpness, contrast, brightness, color, geometry of a display device, geometry of a display process and/or the like, in particular with respect to pixels.

**20.** Method according to any one of the preceding claims,
wherein said pre-distortion operation (PDO), said pre-distortion function (PDF) and/or said image distortion data (IDD) are determined by using at least one test function or test image (TI), in particular represented by crosshatch function of well-defined and predefined parameters.

**21.** Method according to any one of the preceding claims,
wherein said pre-distortion operation (PDO), said pre-distortion function (PDF) and/or said image distortion data (IDD) are determined by an objective measurement process, in particular within said step of acquiring (S21) said image distortion data (IDD).

**22.** Method according to any one of the preceding claims,
wherein said pre-distortion operation (PDO), said pre-distortion function (PDF) and/or said image distortion data (IDD) are determined and/or adapted by an iterative process and/or by a feedback process.

**23.** System or apparatus for processing image data,
which is adapted to realize and/or to perform the method for pre-processing image data according to any one of the preceding claims 1 to 22 and/or the steps thereof.

**24.** System or apparatus according to claim 23,
wherein said method for pre-processing said image data is included within or performed together with a process of image processing, geometrical image processing, image post-processing, sharpness and/or contrast enhancement processing and/or the like.

**25.** System or apparatus according to any one of the preceding claims 23 or 24,
which comprises an additional memory for storing said image (PI), said pre-distorted image (PPI), parts thereof, in particular extra pixels thereof.

**26.** Video display system and/or video display apparatus,
**characterized by**
a non-uniformity correction function or feature and/or spatial-varying enhancement function or feature, in particular with respect to different pictures areas, pixel positions, and/or different enhancement amounts.

**27.** Method for image processing, in particular for geometrical image processing, sharpness and/or contrast enhancement,
**characterized by**
a non-uniformity correction function or feature and/or spatial-varying enhancement function or feature, in particular with respect to different pictures areas, pixel positions, and/or different enhancement amounts.

**28.** Computer program product,
comprising computer program means being adapted to perform and/or to realize a method for pre-processing image data according to any one of the claims 1 to 22 or the steps thereof or the system according to any one of the claims 23 to 25, when it is executed on a computer, a digital signal processing means and/or the like.

**29.** Computer readable storage medium,
comprising a computer program product according to claim 28.

Crosshatch test Image

Fig. 1

device-distorted

ideal

pre-distorted

Example of an Image in device-distorted, ideal and pre-distorted form

Fig. 2

pre-distorted

device → ideal picture

Image or Picture reconstruction

Fig. 3

EP 1 742 459 A1

image

pre-warping → device → processed

reference
model
building

distorted

model
inversion

tuning

Block diagram for geometry distortion correction

Fig. 4

Mirroring method for Pre-warping

Fig. 5

grey value

255

127

0    1    2    3    4

2T impulse signal

Fig. 6

Visualization of the "outlier and hole" problem

Fig. 7

Source $\xrightarrow{\text{PID}}$ | Pre-Distortion PDO, PDF | $\xrightarrow{\text{SID}}$ | Display Process DO, DF | $\xrightarrow{\text{I}}$ Output

overall transfer function T

$$T = DO \circ PDO = id$$

## Fig. 8

EP 1 742 459 A1

Fig. 9

**European Patent Office**

**EUROPEAN SEARCH REPORT**

Application Number

EP 05 01 2683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 840 491 A (THALES) 5 December 2003 (2003-12-05) * page 3, lines 13-17 * * page 4, line 8 * * page 4, lines 23-25 * * page 7, lines 34,35 * * page 8, lines 9,10 * * page 8, lines 19,20 * * page 1, line 24 * | 1-29 | H04N3/233 |
| A | US 6 697 062 B1 (CABRAL BRIAN KEITH ET AL) 24 February 2004 (2004-02-24) * column 10, lines 57,58 * | 9 | |
| A | WITTENBRINK C M ET AL: "2D and 3D optimal parallel image warping" PARALLEL PROCESSING SYMPOSIUM, 1993., PROCEEDINGS OF SEVENTH INTERNATIONAL NEWPORT, CA, USA 13-16 APRIL 1993, LOS ALAMITOS, CA, USA,IEEE COMPUT. SOC, US, 13 April 1993 (1993-04-13), pages 331-337, XP010031993 ISBN: 0-8186-3442-1 * paragraph [01.1] * | 11 | TECHNICAL FIELDS SEARCHED (IPC) H04N |
| A | WOLBERG G: "digital image warping, PASSAGE" DIGITAL IMAGE WARPING, LOS ALAMITOS, IEEE COMP. SOC. PRESS, US, 1992, pages 117-149,160, XP002227049 * paragraph [05.1] * | 1 | |
| A | US 6 753 907 B1 (SUKTHANKAR RAHUL ET AL) 22 June 2004 (2004-06-22) * column 5, lines 48-60 * | 1 | |

-/--

The present search report has been drawn up for all claims

| Place of search | Date of completion of the search | Examiner |
|---|---|---|
| The Hague | 1 February 2006 | Wahba, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 05 01 2683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/020732 A1 (JASA TOMISLAV ET AL) 30 January 2003 (2003-01-30) * paragraph [0081] * ----- | 1 | |
| A | US 5 715 385 A (STEARNS ET AL) 3 February 1998 (1998-02-03) * column 4, lines 38-43 * ----- | 1 | |

TECHNICAL FIELDS SEARCHED (IPC)

The present search report has been drawn up for all claims

| Place of search | Date of completion of the search | Examiner |
|---|---|---|
| The Hague | 1 February 2006 | Wahba, A |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**                    EP 05 01 2683

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2006

| Patent document cited in search report | | Publication date | Patent family member(s) | | Publication date |
|---|---|---|---|---|---|
| FR 2840491 | A | 05-12-2003 | AU | 2003254537 A1 | 19-12-2003 |
| | | | BR | 0304931 A | 24-08-2004 |
| | | | CA | 2455764 A1 | 11-12-2003 |
| | | | EP | 1516304 A1 | 23-03-2005 |
| | | | WO | 03102904 A1 | 11-12-2003 |
| | | | JP | 2005528833 T | 22-09-2005 |
| | | | US | 2004179271 A1 | 16-09-2004 |
| US 6697062 | B1 | 24-02-2004 | US | 2004189654 A1 | 30-09-2004 |
| US 6753907 | B1 | 22-06-2004 | AU | 3265401 A | 03-07-2001 |
| | | | WO | 0147259 A1 | 28-06-2001 |
| US 2003020732 | A1 | 30-01-2003 | NONE | | |
| US 5715385 | A | 03-02-1998 | US | 5475803 A | 12-12-1995 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002164083 A
- US 6568814 B
- WO 0147259 A
- WO 0147285 A
- WO 02101443 A

**Non-patent literature cited in the description**

- **G. WOLBERG.** Digital Image Warping. IEEE Computer Society Press, 1990
- **W.K. PRATT.** Digital Image Processing. John Wiley & Sons, Inc, 1991
- **C.A. GLASBEY ; K.V. MARDIA.** A Review of Image-Warping Methods. *Journal of Applied Statistics,* 1998, vol. 25 (2
- *Universal Geometric Correction,* 2000, www.is-di.com
- **M. WINZKER ; U. RABELER.** VLSI Architecture for Electronic Correction of Optical Distortions. *ITG-Fachbericht, Elektronische Medien: Technologien, Systeme, Anwendungen*
- **H. FARID ; A.C. POPESCU.** Blind Removal of Image Non-Linearities. *Proceedings of the Eighth IEEE International Conference on Computer Vision, 2001. ICCV,* 2001, vol. 1, 76-81
- **H. FARID ; A.C. POPESCU.** Blind Removal of Lens Distortion. *JOSA A,* September 2001, vol. 18, 2072-2078
- Numerical Recipes in C. Cambridge University Press, 1992
- Stabilisierung des Bildstandes bei Bewegtbildsequenzen. **T. LEONARD.** Dissertation der Universität Dortmund. Shaker Verlag, 1999